# EUROPÄISCHE PATENTSCHRIFT

(11) **EP 0 890 165 B1**
(45) Veröffentlichungstag und Bekanntmachung des Hinweises auf die Patenterteilung: **08.12.1999**
(21) Anmeldenummer: 97902312.4
(22) Anmeldetag: 04.02.1997
(51) Int. Cl.: G10K 11/172

(54) **MEHRSCHICHTIGES, SCHALLABSORBIERENDES BAUTEIL**
MULTI-LAYER SOUND-ABSORBENT COMPONENT
ELEMENT A PLUSIEURS COUCHES A ABSORPTION ACOUSTIQUE

(30) Priorität: 26.03.1996 DE 29605599 U
(43) Veröffentlichungstag der Anmeldung: 13.01.1999
(73) Patentinhaber: M.Faist Gmbh & Co. Kg, 86381 Krumbach (DE)
(72) Erfinder: PFAFFELHUBER, Klaus, D-89312 Günzburg (DE); KÖCK, Gerhard, D-86480 Waltenhausen (DE); LAHNER, Stefan, D-86381 Krumbach (DE)
(74) Vertreter: Müller, Hans-Jürgen, Dipl.-Ing.
(86) Internationale Anmeldenummer: EP9700487
(87) Internationale Veröffentlichungsnummer: WO9736284

(56) Entgegenhaltungen:
- EP-A- 0 121 947
- EP-A- 0 274 097
- EP-A- 0 454 949
- DE-A- 3 534 690
- DE-U- 9 414 943
- GB-A- 2 252 073

## Beschreibung

Die Erfindung bezieht sich auf ein mehrschichtiges, schallabsorbierendes Bauteil der im Oberbegriff des Anspruchs 1 genannten Gattung.

Derartige Bauteile sind bereits bekannt (EP 0 214 559 A3 und 0 640 951 A2 sowie 0 454 949 A3 und DE-GM 92 15 132). Bei einem Schallisolationsteil für Flächen innerhalb von Fahrgasträumen von Kraftfahrzeugen wird ein sogenanntes "Masse-Feder-System" gebildet, bei welchem die einzelnen Kammern durch Folien umhüllt und in Schaumstoff eingebettet sind, welcher zusätzlich durch eine Schwerschicht überzogen ist. Dabei können die Kammern luftgefüllt sein. Dieser Bauteil ist jedoch herstellungstechnisch teuer und weist ein verhältnismäßig hohes Gewicht auf.

Das Bauteil nach EP 0 640 951 A2 weist innerhalb des Schaumstoffs ausgeformte Hohlräume auf, die über Verbindungskanäle durch den Schaumstoff hindurch mit der Abdeckschicht in Verbindung stehen.

Nach der EP 0 454 949 A3 werden als Helmholtz-Resonatoren dienende Kammern in einem Kunststoff aus PP, PA oder Polycarbonat gebildet, der als formstabile Platte ausgebildet und mit der Trägerschicht verbunden ist.

Nach der DE-GM 92 15 132 wird als solche die Kammern bildende Platte offenporiger PU-Schaum verwendet, der beidseitig mit einer PU-Folie überzogen ist. Die Platte ist auf die Trägerschicht aufgeklebt, welche eine Motorkapsel bilden kann. Auch hier ist die Herstellung verhältnismäßig aufwendig und lassen die schallabsorbierenden Wirkungen zu wünschen übrig.

Der Erfindung liegt die Aufgabe zugrunde, einen Bauteil der eingangs genannten Gattung auf einfache Weise dahingehend zu verbessern, daß sowohl die Herstellung einfach bewerkstelligt als auch die schallabsorbierende Wirkung insbesondere bezüglich bestimmter Frequenzgebiete verbessert werden kann.

Die Erfindung ist im Anspruch 1 gekennzeichnet und in Unteransprüchen sind weitere Ausbildungen derselben beansprucht. Darüber hinaus werden bevorzugte Ausbildungen der Erfindung anhand der folgenden Figurenbeschreibung näher erläutert:

Gemäß der Erfindung werden die Resonanzkammern durch eine zwar verformte, aber biegbare Folie gebildet, auf welche die poröse Weichschicht an der der Trägerschicht abgewandten Seite der Folie aufgeschäumt ist, so daß die Resonanzkammern nach einer Ausbildung der Erfindung zwischen der Folie und der Trägerschicht und nach einer anderen bevorzugten Ausbildung der Erfindung zwischen der Folie und einer weiteren Folie gebildet sind, welche die erstgenannte Folie in Richtung zur Trägerschicht abdeckt. Die Folie kann aus einem Material bestehen, das sich bei den Aufschäumtemperaturen soweit expandierbar bzw. durch Dehnung verformbar verhält, daß sich die Resonanzkammern durch den ansteigenden Druck eingeschlossener Luft vergrößern. Die Folie kann aber auch für andere Anwendungszwecke während des Aufschäumens genügend eigensteif bleiben.

Die Herstellung des erfindungsgemäßen Bauteils ist außerordentlich einfach, da für die Folie bzw. das Folienpaar wohlfeile sogenannte "Luftpolsterfolien" verwendet werden können, die in der Verpackungsindustrie zum stoßdämpfenden Verpacken seit Jahrzehnten bekannt sind. Es ist lediglich erforderlich, das Material der Folie, die Abmessungen und Volumina der Resonanzkammern und die mit der Folie in Verbindung stehende Weichschicht entsprechend dem besonders zu dämpfenden Frequenzgebiet aufeinander abzustimmen.

Ein besonderer Vorteil der Verwendung von Luftpolsterfolien für die Kammerbildung ist im Fertigungsprozeß zu sehen. Die Kammern der Luftpolsterfolie besitzen, bedingt durch die geringe Eigensteifigkeit des Folienmaterials, ein Volumen, das von der Temperatur der eingeschlossenen Luftpolster abhängt. Bei Zimmertemperatur sind die Kammern relativ schlaff, was den Fluß des beim Schäumprozeß eingeschlossenen PUR-Schaums begünstigt. Wird die Kammer schließlich vom heißen PUR umgeben, so dehnt sich das Luftpolster aus. Die letztendlich stramm aufgeblasenen Luftpolster führen zu einer halbrund ausgebildeten Kammer im Schaumstoff. Somit bietet sich die Möglichkeit, durch die Steuerung der Temperatur im Luftpolster den Fertigungsprozeß zu beeinflussen.

Der Verbund aus der Folie bzw. dem Folienpaar und der Weichschicht sowie der Abdeckschicht kann als solches das erfindungsgemäße Bauteil bilden, um erst an Ort und Stelle insbesondere am Motorraum bzw. dessen Trennwänden angebracht zu werden. Dieser Verbund kann aber auch bereits mit der Trägerschicht als integrierter Bauteil hergestellt und am Einsatzort, insbesondere im Bereich der Abgrenzung des Motorraums insbesondere zum Fahrgastraum von Kraftfahrzeugen, montiert werden.

Die Erfindung bietet ein einfaches Verfahren, den Schallfrequenzgang gezielt zu dämpfen bzw. zu dämmen. Durch die Hohlräume zwischen der Trägerschicht und der porösen Schaumstoff-Weichschicht entstehen Masse-Feder-Resonatoren, deren Resonanzfrequenzen sich aus der Steifigkeit des Luftpolsters und der Masse der darüberliegenden Komponenten ergeben. Bei der Resonanzfrequenz besitzt die jeweilige Resonanzkammer ein Absorptionsmaximum.

Es empfiehlt sich daher, eine solche Folie bzw. solche Folien zur Herstellung der Resonanzkammern zu verwenden, die zwar bei genügender Eigensteifigkeit eine gewisse Verformbarkeit und Elastizität aufweisen, um solche Resonanzeffekte zu bewirken, die aber beim Aufschäumen der Weichschicht ihre die Resonanzkammern ausbildende Form nicht verlieren. Besonders bevorzugt wird folgendes Material für die Folien verwendet:

Polyethylen, Polypropylen, Polyester und/oder Polyurethan. Die Foliendicke sollte sich im Bereich zwischen 20 µm und 5 mm befinden.

Als Material für die Weichschicht wird ein Kunststoff aus insbesondere PUR-Schaum verwendet. Das Aufschäumen erfolgt in der bekannten Aufschäumtechnik.

Ausführungsbeispiele für die Erfindung werden anhand der Zeichnungen näher erläutert. Dabei zeigen:
- Figur 1: ein Paar zweier Folien, welche die Resonanzkammern bilden, im vergrößerten schematischen Querschnitt;
- Figur 2: einen erfindungsgemäßen Bauteil im vergrößerten schematischen Querschnitt und
- Figur 3: eine Aufsicht auf einen Teil eines erfindungsgemäßen Bauteils, bei dem einige Teilschichten teilweise abgeboben sind.

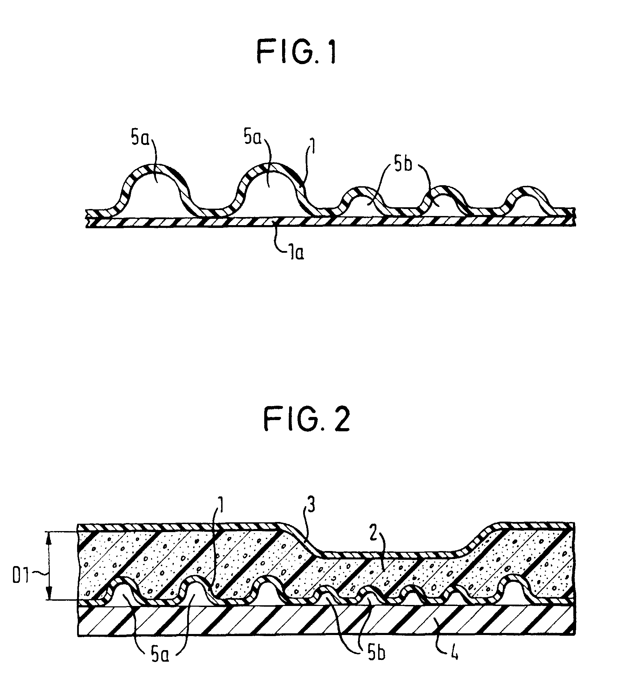

Gemäß Figur 1 ist eine Folie 1 aus Polyurethan mit einer Foliendicke von 1 mm derart verformt, daß sich kalottenförmige größere hohlraumartige Kammern 5a und kleinere Kammern 5b ausbilden. An der unteren Seite dieser Folie 1 ist eine weitere Folie la aus insbesondere gleichem Material und gleicher Schichtdicke in unverformten Zustand aufgesetzt. Beide Folien 1, la sind derart miteinander verbunden, daß die Resonanzkammern 5a, 5b, die mit Luft gefüllt sind, nach außen abgedichtet sind. Es ist auch möglich, die zweite Folie la entsprechend zu verformen. Eine derartige, als sogenannte "Luftpolsterfolie" in der Verpackungsindustrie bekannte Verbundfolie wird gemäß der Erfindung bevorzugt zur Herstellung des schallabsorbierenden Bauteils verwendet.

Gemäß Figur 2 ist eine Folie 1 nach Art der Figur 1, jedoch ohne die zweite Folie la, unmittelbar auf eine eigensteife Trägerschicht 4 aufgeklebt, so daß die großen Resonanzkammern 5a und die kleinen Resonanzkammern 5b zwischen der verformten und biegbaren, aber genügend eigensteifen Folie 1 einerseits und der eigensteifen Trägerschicht 4 gebildet sind. An der der Trägerschicht 4 abgewandten Seite der Folie 1 ist eine Weichschicht 2 aus Polyurethan aufgeschäumt und nach außen durch eine dünne Abdeckschicht 3 aus PUR-Folie abgedeckt, damit sich die Hohlräume und Poren im Schaum der Weichschicht 2 nicht durch Schmutz, Feuchtigkeit und Öl vollsetzen und im Laufe der Zeit die schallabsorbierenden Eigenschaften beeinträchtigen. Das zu absorbierende Frequenzspektrum hängt unter anderem von der Größe der Resonanzkammern 5a, 5b und der Dicke der Weichschicht 2 ab. Die Schichtdicke D1 der Weichschicht 2 nach dem Aufschäumen beträgt 10 mm.

Die Erfindung zeichnet sich darüber hinaus durch ein verhältnismäßig leichtes Gewicht aus. Abgesehen von der einfachen Herstellung bereitet auch die Entsorgung erfindungsgemäßer Bauteile keine Probleme.

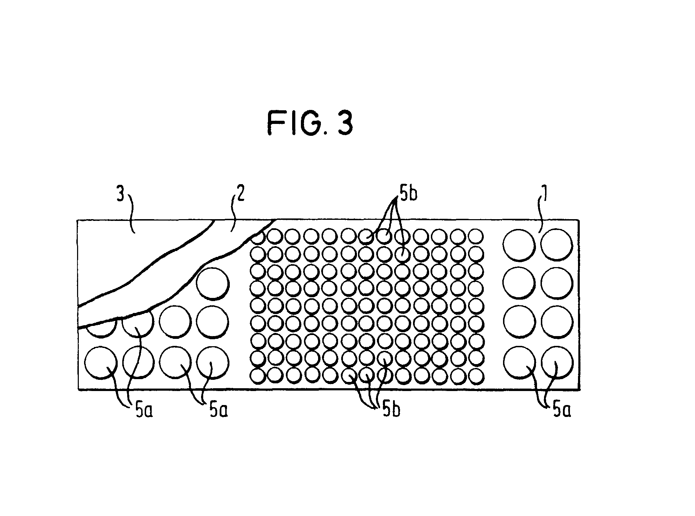

Gemäß Figur 3 ist im linken oberen Teil der Aufsicht auf den erfindungsgemäßen Bauteil keine Kammern 5 sichtbar, da diese durch die Weichschicht 2 und die darübergelegte Abdeckschicht 3 verborgengehalten sind. An den übrigen Teilen sind jedoch die Abdeckschicht 3 und die Weichschicht 2 abgehoben, so daß die größeren Kammern 5a und die kleineren Kammern 5b sichtbar sind. Die Kammerbegrenzung erfolgt durch die verformte Folie 1.

## Patentansprüche

1. Mehrschichtiges, schallabsorbierendes Bauteil zum Aufbringen auf eine im wesentlichen starre Trägerschicht (4) oder in Verbindung mit dieser, mit einer im wesentlichen porösen Weichschicht (2), die im wesentlichen aus Schaumstoff besteht und zur Bildung schallabsorbierender Resonanzeffekte ein System von Kammern (5a, 5b) aufweist, und mit einer dünnen Abdeckschicht (3) zumindest an der der Trägerschicht (4) abgewandten Seite,
**dadurch gekennzeichnet,**
daß die Resonanzkammern (5a, 5b) durch eine verformte und biegbare Folie (1) gebildet sind, auf welche die poröse Weichschicht (2) an der der Trägerschicht (4) abgewandten Seite aufgeschäumt ist.

2. Bauteil nach Anspruch 1,
**dadurch gekennzeichnet,**
daß die Resonanzkammern (5a, 5b) durch zwei miteinander verbundene Folien (1, 1a) gebildet sind, welche die Resonanzkammern (5a, 5b) im wesentlichen luftdicht umschließen.

3. Bauteil nach Anspruch 2,
**dadurch gekennzeichnet,**
daß die Resonanzkammern (4a, 4b) mit Luft gefüllt sind.

4. Bauteil nach einem der vorhergehenden Ansprüche,
**dadurch gekennzeichnet,**
daß die Folie (n) (1, 1a) aus Polyethylen, Polypropylen, Polyester und/oder Polyurethan besteht/bestehen.

5. Bauteil nach einem der vorhergehenden Ansprüche,
**dadurch gekennzeichnet,**
daß die Weichschicht aus PUR-Schaum besteht.

6. Bauteil nach einem der vorhergehenden Ansprüche,
**dadurch gekennzeichnet,**
daß die Resonanzkammern (5a, 5b) unterschiedliche Volumina aufweisen.

7. Bauteil nach einem der vorhergehenden Ansprüche,
**dadurch gekennzeichnet,**
daß für die verformte biegbare Folie (1) bzw. die beiden Folien (1, 1a) aus der Verpackungsindustrie bekannte "Luftpolsterfolien" verwendet sind.

8. Bauteil nach einem der vorhergehenden Ansprüche,
**dadurch gekennzeichnet,**
daß die verformte biegbare Folie (1) eine solche Eigensteifigkeit aufweist, die Verformen durch das Aufschäumen der porösen Weichschicht (2) im wesentlichen vermeidet.

9. Bauteil nach einem der Ansprüche 1-7,
**dadurch gekennzeichnet,**
daß die biegbare Folie (1) beim Aufschäumen der porösen Weichschicht (2) die Resonanzkammern (5a, 5b) vergrößernd expandiert.

## Claims

1. A multi-layer sound-absorbent component to be mounted on a substantially rigid carrier layer (4) or in conjunction with the latter, comprising a substantially porous soft layer (2) substantially consisting of foamed material and comprising a chamber system (5a, 5b) for producing sound-absorbing resonance effects, and a thin cover lyer (3) at least on the side remote from the carrier layer (4)
**characterised in**
that the resonance chambers (5a, 5b) are formed by a deformed, but pliable foil (1) onto which the porous soft layer (2) is applied as a foam on the foil side remote from the carrier layer (4).

2. A component according to claim 1,
**characterised in**
that the resonance chambers (5a, 5b) chambers are formed by two foils (1, la) connected to each other and surrounding the resonance chambers (5a, 5b) in a substantially air-tight manner.

3. A component according to claim 2,
**characterised in**
that the resonance chambers (5a, 5b) are filled with air.

4. A component according to any of the preceding claims,
**characterised in**
that the foil(s) (1, 1a) consist(s) of polyethylene, polypropylene, polyester and/or polyurethane.

5. A component according to any of the preceding claims,
**characterised in**
that the soft layer is made of PUR foam.

6. A component according to any of the preceding claims,
**characterised in**
that the resonance chambers (5a, 5b) comprise different volumes.

7. A component according to any of the preceding claims,
**characterised in**
that "air-cushion foils" known from the packaging industry are used for the deformed and pliable foil (1) or, respectively, the two foils (1, 1a).

8. A component according to any of the preceding claims,
**characterised in**
that the deformed and pliable foil (1) comprises an intrinsic stiffness which substantially prevents any deformation by the foaming of the porous soft layer (2).

9. A component according to any of claims 1-7,
**characterised in**
that the pliable foil (1) increasingly expands the resonance chambers (5a, 5b) during the foaming of the porous soft layer (2).

## Revendications

1. Composant multicouche à absorption phonique, destiné à être appliqué sur une couche de support (4) sensiblement rigide, ou en liaison avec celle-ci, comportant une couche souple (2) sensiblement poreuse, qui présente un système de chambres (5a, 5b), pour former des effets de résonance à absorption phonique et comportant une mince couche de couverture (3) au moins sur la face opposée à la couche de support (4), caractérisé en ce que les chambres de résonance (5a, 5b) sont formées par une feuille (1) déformée et flexible, sur laquelle on fait mousser la couche souple (2) poreuse sur la face opposée à la couche de support (4).

2. Composant selon la revendication 1, caractérisé en ce que les chambres de résonance (5a, 5b) sont formées par deux feuilles (1, la) assemblées entre elles, qui enferment les chambres de résonance (5a, 5b) de manière sensiblement étanche à l'air.

3. Composant selon la revendication 2, caractérisé en ce que les chambres de résonance (5a, 5b) sont remplies d'air.

4. Composant selon l'une des revendications précédentes, caractérisé en ce que la (les) feuille(s) (1, 1a) est (sont) en polyéthylène, polypropylène, polyester et/ou polyuréthanne.

5. Composant selon l'une des revendications précédentes, caractérisé en ce que la couche souple est en mousse de polyuréthanne.

6. Composant selon l'une des revendications précédentes, caractérisé en ce que les chambres de résonance (5a, 5b) présentent des volumes différents.

7. Composant selon l'une des revendications précédentes, caractérisé en ce que pour la feuille (1) ou les deux feuilles (1, 1a) flexibles et déformées on utilise des « feuilles à bulles » connues dans l'industrie de l'emballage.

8. Composant selon l'une des revendications précédentes, caractérisé en ce que la feuille (1) flexible et déformée présente une rigidité inhérente propre à éviter pour l'essentiel des déformations dues au moussage de la couche souple (2) poreuse.

9. Composant selon l'une des revendications 1 à 7, caractérisé en ce que la feuille (1) flexible expanse les chambres de résonance (5a, 5b) en les agrandissant, lors du moussage de la couche souple (2) poreuse.
